# EUROPEAN PATENT APPLICATION

(11) **EP 4 756 775 A1**
(43) Date of publication of application: **10.06.2026**
(21) Application number: 25217383.6
(22) Date of filing: 20.11.2025
(51) Int. Cl.: G08B 29/12

(54) **SOUND LEVEL TESTING**

(30) Priority: 09.12.2024 US 202418973459
(71) Applicant: Honeywell International Inc., Charlotte, NC 28202 (US)
(72) Inventor: WOLF, Benjamin Henry, Charlotte, 28202 (US); BAUMGART, Anika, Charlotte, 28202 (US); KUNKATI, Suneel, Charlotte, 28202 (US)
(74) Representative: Haseltine Lake Kempner LLP

(57) **Abstract**

Devices, methods, and systems for sound level testing are described herein. An example mobile device includes a user interface, a memory, and a processor configured to execute instructions stored in the memory to determine a sound emitting device of a facility that is located closest to the mobile device based on location information received by the mobile device, receive, via the user interface, an instruction to initiate a sound level test of the sound emitting device that is located closest to the mobile device, send, to a computing device, a command to initiate the sound level test of the sound emitting device that is located closest to the mobile device responsive to receiving the instruction, and record, during the sound level test, a sound level of the sound emitting device that is located closest to the mobile device.

## Description

### Technical Field

The present disclosure relates generally to devices, methods, and systems for sound level testing.

### Background

Large facilities (e.g., buildings), such as commercial facilities, office buildings, hospitals, and the like, may have a fire alarm system and/or a public address voice alarm system that can be triggered during an emergency event (e.g., a fire) to provide guidance to occupants of the facility, such as, for instance, a warning for the occupants to evacuate. For example, a fire alarm system may include a fire control panel and a plurality of fire sensing devices (e.g., sounders and/or smoke detectors), located throughout the facility (e.g., on different floors and/or in different rooms of the facility) that can sense a fire occurring in the facility and provide an audio notification of the fire to the occupants of the facility via alarms. As an additional example, a public address voice alarm system can include a plurality of speakers and/or microphones that can provide audio instructions and/or commands to the occupants of the facility during the emergency event.

During commissioning and/or maintenance of a fire alarm system or a public address voice alarm system, the sound emitting devices (e.g., sounders, detectors, speakers, microphones, etc.) of the system need to be tested to ensure they are emitting the proper sound level. However, such sound level testing can be a hugely time-consuming process. For instance, sound level testing can make up to 25% of the commissioning process. Further, such sound level testing (e.g., the sound emitted by the devices during the testing) can be a major irritant to the occupants of the facility. For instance, the sound emitted by the devices can be overwhelming for people with autism or other sound sensitivities. Further, such sound level testing may not always produce accurate results.

### Brief Description of the Drawings

Figure 1 illustrates an example of a system for sound level testing in accordance with an embodiment of the present disclosure.
Figures 2A-2D illustrate example displays for sound level testing in accordance with an embodiment of the present disclosure.
Figure 3A illustrates a block diagram of a mobile device for sound level testing in accordance with an embodiment of the present disclosure.
Figure 3B illustrates a block diagram of a computing device for sound level testing in accordance with an embodiment of the present disclosure.

### Detailed Description

Devices, methods, and systems for sound level testing are described herein. An example mobile device includes a user interface, a memory, and a processor configured to execute instructions stored in the memory to determine a sound emitting device of a facility that is located closest to the mobile device based on location information received by the mobile device, receive, via the user interface, an instruction to initiate a sound level test of the sound emitting device that is located closest to the mobile device, send, to a computing device, a command to initiate the sound level test of the sound emitting device that is located closest to the mobile device responsive to receiving the instruction, and record, during the sound level test, a sound level of the sound emitting device that is located closest to the mobile device.

As noted above, previous approaches for sound level testing of sound emitting devices of a fire alarm system or a public address voice alarm system (e.g., during commissioning or maintenance of the system) can be a hugely time-consuming process. For example, previous approaches for such sound level testing may be a manual process in which a technician or other user must sound the devices throughout the facility and take sound recordings from several points in different areas (e.g., rooms) of the facility, make note of the recordings in a report, and then repeat the testing with a witness to validate that the proper sound level is being achieved at all points in the facility.

In contrast, embodiments of the present disclosure can provide for automated sound level testing of sound emitting devices of a fire alarm system or a public address voice alarm system, which can take significantly less time than previous manual approaches. For example, in some instances, automated sound level testing in accordance with the present disclosure can take 35% less time than the manual sound level testing of previous approaches.

Further, as noted above, previous approaches for sound level testing of sound emitting devices of a fire alarm system or a public address voice alarm system can be a major irritant to the occupants of the facility, especially for people with autism or other sound sensitivities, and can be inaccurate. However, automated sound level testing in accordance with the present disclosure can more precisely determine (e.g., locate) where the sound level is being tested at a given time, and generate audio only from the sound emitting devices of the appropriate zone or a specific (e.g., single) device. Further, automated sound level testing in accordance with the present disclosure can efficiently manage power consumption by ensuring that the sound level output by the devices is neither too high nor too low, and make recommendations for changing (e.g., attenuating) the sound level to the appropriate level. Accordingly, automated sound level testing in accordance with the present disclosure can be less irritating (e.g., less overwhelming) to the occupants of the facility, and more accurate, than previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

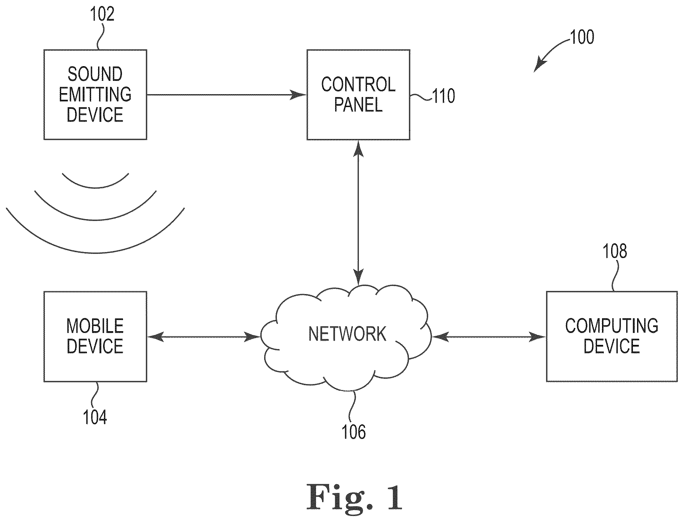

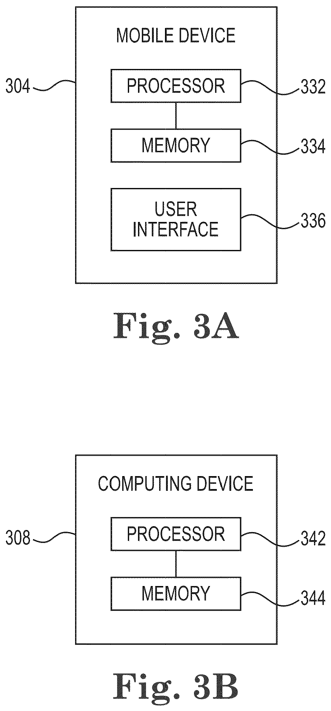

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 304 in Figure 3A.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates an example of a system 100 for sound level testing in accordance with an embodiment of the present disclosure. For example, system 100 can be used to test the sound level (e.g., the sound pressure and/or intelligibility) of sound emitting device 102 of a facility (e.g., building). The facility can be, for instance, a large facility having a large number of floors, such as a commercial facility, office building, hospital, and the like. However, embodiments of the present disclosure are not limited to a particular type of facility.

Sound emitting device 102 can be, for example, a sounder or smoke detector of a fire alarm system of the facility. Such a sound emitting device can provide an audio notification (e.g., audio alarm) of a fire or other emergency occurring in the facility to the occupants of the facility. As an additional example, sound emitting device 102 can be a device (e.g., a speaker and/or microphone) of a public address voice alarm system that can provide audio instructions and/or commands to the occupants of the facility during a fire or other emergency occurring in the facility. In some examples, sound emitting device 102 may be tested during commissioning and/or maintenance of the fire alarm system or public address voice alarm system.

Although a single sound emitting device 102 is shown in Figure 1 for simplicity and so as not to obscure embodiments of the present disclosure, the facility (e.g., the fire alarm system or public address voice alarm system of the facility) may include a plurality of sound emitting devices located throughout the facility (e.g., in different rooms and on different floors of the facility). For example, sound emitting device 102 may be one of a plurality of sound emitting devices of a particular zone (e.g., area) of the facility.

As shown in Figure 1, system 100 can include a control panel 104. Control panel 104 can be, for instance, a physical control panel, such as a control box, installed in the facility.

Control panel 104 can be used (e.g., by a user) to monitor and/or control components (e.g., devices, such as sound emitting device 102) of the fire alarm system and/or public address voice alarm system of the facility. For instance, the user can use control panel 104 to directly control the operation of (e.g., actions performed by) the components. Further, control panel 104 can receive (e.g., collect) data, such as, for instance, real-time operational data, from the components. For instance, control panel 104 can receive the data directly from the components. Such data can include, for instance, current operational statuses, operational states, and/or properties of the components. As an additional example, control panel 104 can receive signals (e.g., alarm signals) from the components indicating that an emergency event (e.g., a fire) is occurring in the facility. The components being monitored and/or controlled by control panel 104 can include, in addition to devices such as sound emitting device 102, fans and/or dampers that can perform smoke control operations (e.g., pressurizing, purging, exhausting, etc.) during a fire, and/or sprinklers that can provide water to extinguish a fire, among other components.

As shown in Figure 1, system 100 can include a mobile device 104. Mobile device 104 can be, for example, a tablet, smartphone, laptop, or wearable device (e.g., smart watch) of a technician or engineer of the fire alarm system or public address voice alarm system. An example of mobile device 104 will be further described herein (e.g., in connection with Figure 3A).

During sound level testing of the sound emitting devices of the facility, a user (e.g., technician or engineer) of mobile device 104 may travel (e.g., walk) through the facility to test the sound emitting devices of the facility using mobile device 104. For example, the user may travel to a location in the facility with (e.g., while holding) mobile device 104, and mobile device 104 can determine the sound emitting device that is located closest (e.g., most proximal) to that location (e.g., to the location of mobile device 104). In the example illustrated in Figure 1, sound emitting device 102 is determined to be the closest sound emitting device to mobile device 104.

Mobile device 104 can determine the closest sound emitting device based on location information received by the mobile device. For example, in some embodiments, mobile device 104 can determine sound emitting device 102 is the closest sound emitting device based on the strength of a wireless signal, such as a Bluetooth or Wi-Fi signal, received from the sound emitting device at that location. For example, each respective sound emitting device of the facility may emit a wireless signal that includes an identification and location (e.g., room) of that device, which can be received by mobile device 104, and the sound emitting device whose wireless signal strength received at that location by mobile device 104 is the strongest can be determined to be the closest sound emitting device.

As an additional example, in some embodiments, mobile device 104 can determine sound emitting device 102 is the closest sound emitting device by scanning a code, such as a QR code, on the sound emitting device. For example, each respective sound emitting device of the facility may include a code that includes an identification and location that device, which can be scanned by mobile device 104, and the sound emitting device whose code is scanned by mobile device 104 can be determined to be the closest sound emitting device.

As an additional example, in some embodiments mobile device 104 can determine sound emitting device 102 is the closest sound emitting device based on location information received from a different sound emitting device. For instance, the different sound emitting device may know location information for sound emitting device 102, and send that information to mobile device 104.

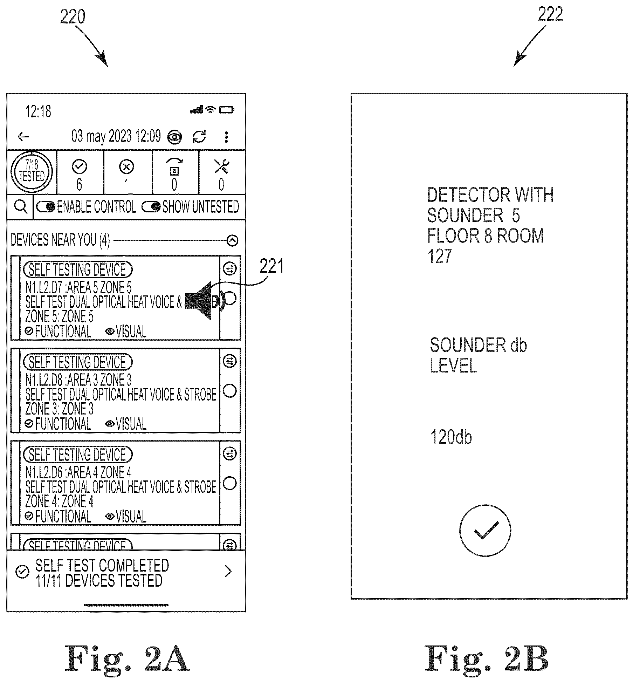

Mobile device 104 can receive an instruction to initiate a sound level test of the sound emitting device (e.g., sound emitting device 102) determined to be located closest to the mobile device. The instruction can comprise, for instance, a selection (e.g., a touch selection) of sound emitting device 102 (e.g., of an icon representing sound emitting device 102) made by the user of mobile device 104 via a user interface of mobile device 104. For example, mobile device 104 can display, on the user interface, the sound emitting devices (e.g., an identification of the sound emitting devices) from which a wireless signal has been received (e.g., the sound emitting devices within wireless range of the mobile device) in a list or on a map of the facility at their respective locations, along with an identification of which of the sound emitting devices is located closest to mobile device 104. For instance, the closest sound emitting device can be included at the top of the list or highlighted on the map. The user can then select, via the user interface of mobile device 104, the closest sound emitting device from the list or map. An example of such a display will be further described herein (e.g., in connection with Figure 2A).

In some embodiments, the instruction can be an instruction to initiate a sound level test of only the sound emitting device located closest to mobile device 104 (e.g., only sound emitting device 102). For instance, the user can make a selection to test only sound emitting device 102. In some embodiments, the instruction can be an instruction to initiate a sound level test of all the sound emitting devices of the facility that are in the same zone of the facility (e.g., the same zone of the fire alarm system or the public address voice alarm system of the facility) as the sound emitting device located closest to mobile device 104. For instance, the user can make a selection to test all sound emitting devices of the facility that are in the same zone as sound emitting device 102 (e.g., including sound emitting device 102).

Responsive to receiving the instruction to initiate the sound level test, mobile device 104 can send, via network 106, a command to computing device 108 of system 100 to initiate the sound level test of the sound emitting device that is located closest to mobile device 104 (e.g., sound emitting device 102). For instance, if the received instruction is to initiate the sound level test of only sound emitting device 102, mobile device 104 can send a command to initiate the sound level test of only sound emitting device 102 to computing device 108. If the received instruction is to initiate the sound level test of all sound emitting devices of the facility in the same zone as sound emitting device 102, mobile device 104 can send a command to initiate the sound level test of all the sound emitting devices that are in the same zone as sound emitting device 102 (e.g., including sound emitting device 102).

Computing device 108 can be located remotely from the facility and, in some embodiments, can be part of a centralized management platform. For instance, computing device 108 can be part of a distributed (e.g., cloud) computing environment. Further, computing device 108 can be the computing device of a manager of the facility.

Mobile device 104 can communicate with computing device 108 via network 106, as illustrated in Figure 1. For example, mobile device 104 can send a command to initiate a sound level test of sound emitting device 102 to computing device 108. Computing device 108 can also communicate with control panel 110 via network 106, as will be further described herein.

Network 106 can be a network relationship through which computing device 108 can communicate with mobile device 104 and control panel 110. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, network 106 can include a number of servers that receive information from, and transmit information to, mobile device 104, computing device 108, and control panel 110 via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

Responsive to receiving the command from mobile device 104, computing device 108 can initiate the sound level test of the sound emitting device that is located closest to mobile device 104 (e.g., sound emitting device 102). Computing device 108 can initiate the sound level test by, for example, sending, via network 106, a command to initiate the test to control panel 110, which in turn can send a command to perform the sound level test to sound emitting device 102. For instance, if the command is to initiate a sound level test of only sound emitting device 102, control panel 110 can send a command to perform the sound level test to only sound emitting device 102 (e.g., and not to any other of the sound emitting devices of the facility). If the command is to initiate a sound level test of all sound emitting devices located in the same zone of the facility as sound emitting device 102, control panel 110 can send a command to perform the sound level test to all sound emitting devices located in the same zone of the facility as sound emitting device 102 (e.g., including to sound emitting device 102).

Computing device 108 can initiate the sound level test of (e.g., the sound level test can be performed by) sound emitting device 102 (e.g., only sound emitting device 102, or all sound emitting devices in the same zone as sound emitting device 102) for a particular duration. The duration can be, for example, a short, concentrated time span that is just long enough for mobile device 104 to record the sound level of sound emitting device 102. For instance, the duration can be ten seconds.

Responsive to receiving the command from control panel 110, sound emitting device 102 (e.g., only sound emitting device 102, or all sound emitting devices in the same zone as sound emitting device 102) can perform the sound level test. For example, responsive to receiving the command, sound emitting device 102 can emit the sound (e.g., audio notification, instruction, and/or command) it would emit if a fire or other emergency situation were actually occurring in the facility.

During the sound level test (e.g., while sound emitting device 102 is performing the sound level test), mobile device 104 can record the sound level of (e.g., emitted by) the sound emitting device located closest to mobile device 104 (e.g., sound emitting device 102). For instance, the user of mobile device 104 can hold mobile device 104 up towards sound emitting device 102 to record the sound level. The recorded sound level can be, for example the decibel (e.g., sound pressure) level of the sound emitted by sound emitting device 102 (e.g., if the sound emitting device is a smoke detector or sounder), or the speech transmission index level of the sound emitted by sound emitting device 102 (e.g., if the sound emitting device is public address voice alarm device). In examples in which the sound level test is being performed by all sound emitting devices in the same zone as sound emitting device 102, the sound level of each respective one of the sound emitting devices in the same zone as sound emitting device 102 can be recorded in an analogous manner.

Mobile device 104 can record the sound level of the sound emitting device(s) using, for instance, the microphone of mobile device 104 or a microphone (e.g., a calibrated microphone) coupled to (e.g., plugged into) mobile device 104. As an additional example, in some embodiments the sound level of the sound emitting device(s) can be recorded using an additional (e.g. third party) device, such as a hand held calibrated decibel reader or other certified device. The additional device can be paired with mobile device 104 to automatically (e.g., digitally) provide the recorded sound level to mobile device 104, or the user of mobile device 104 can manually provide (e.g., type) the sound level recorded by the additional device to mobile device 104 via the user interface of mobile device 104.

In some embodiments, mobile device 104 can record the time of the sound level test. For instance, mobile device 104 can record a timestamp of when the sound level of the sound emitting device(s) was recorded. Further, mobile device 104 can record the location(s) (e.g., the room) of the sound emitting device(s) in the facility. For instance, the location of the sound emitting device(s) can be received from the device(s) (e.g., via the wireless signal or code of the device(s)), as previously described herein.

Mobile device 104 can display, on the user interface of mobile device 104, the recorded sound level(s), the sound level test time, and/or the location(s) of the sound emitting device(s). An example of such a display will be further described herein (e.g., in connection with Figure 2B).

In some examples, the user may wish to record the sound level of sound emitting device 102 (e.g., only sound emitting device 102, or each respective one of the sound emitting devices in the same zone as sound emitting device 102 including sound emitting device 102) during the sound level test from a plurality of different locations. For instance, the user may wish to record the sound level of sound emitting device 102 from at least three different positions in the room in which sound emitting device 102 is located. In such an example, the user can move to the different locations during the sound level test, and mobile device 104 can record the sound level of sound emitting device 102 during the sound level test at each location.

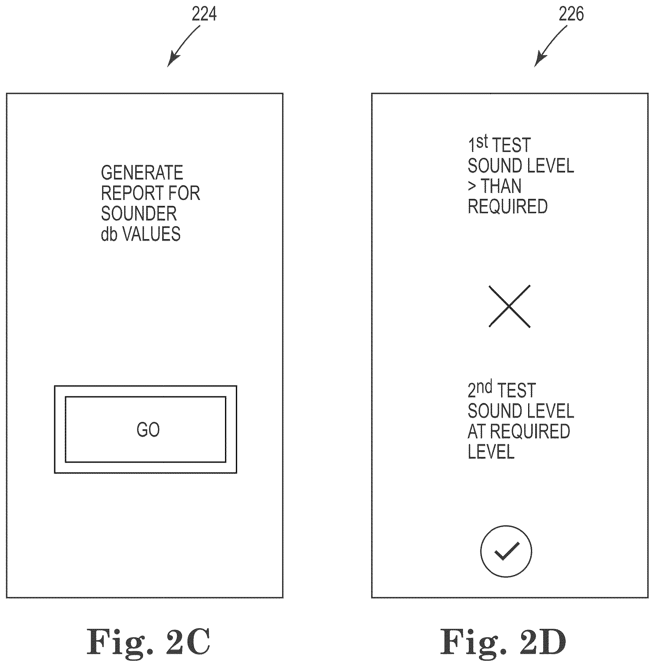

Mobile device 104 can send the sound level(s) recorded during the sound level test (e.g., the recorded sound level(s) of only sound emitting device 102, or the recorded sound level(s) of each respective one of the sound emitting devices in the same zone as sound emitting device 102 including sound emitting device 102) to computing device 108 via network 106, and computing device 108 can store the recorded sound level(s). After the sound level test is complete (e.g., after the sound level of all the sound emitting devices of the facility have been tested), computing device 108 can generate and send, via network 106, a report to mobile device 104 that includes an identification of the sound emitting devices that have been tested, their respective sound level recordings, their respective locations (e.g., rooms), the time of their respective test, and/or the number of different positions from which their respective sound level was recorded. For example, computing device 108 can generate and send the report responsive to receiving a request for the report from mobile device 104 (e.g., from the user of mobile device 104). An example of a display from which mobile device 104 can receive such a request from the user will be further described herein (e.g., in connection with Figure 2C).

In some embodiments, computing device 108 can determine whether the recorded sound level of sound emitting device 102 is outside a particular (e.g., pre-defined) sound level range. In examples in which the sound level of sound emitting device 102 is recorded from a plurality of locations (e.g., positions), computing device 108 can determine the average of the recorded sound levels, and determine whether the average of the recorded sound levels is outside the particular sound level range. The particular sound range can correspond to the proper sound level (e.g., a proper volume and/or intelligibility) for sound emitting device 102, and can be determined based on safety regulations and/or standards applicable to sound emitting devices of the facility, for example. For instance, the recorded sound level being outside the range can indicate that the sound level of sound emitting device 102 is too loud, too soft, and/or not intelligible.

If computing device 108 determines the recorded sound level (or average of the recorded sound levels) of sound emitting device 102 is not outside (e.g., is within) the particular sound level range, computing device 108 can generate a report that includes an indication that sound emitting device 102 has been tested and determined to be within the particular sound level range (e.g., is emitting the proper sound level), and send the report to mobile device 104 via network 106. The report can also include the sound level recording, the location of sound emitting device 102, the time of the test, and/or the number of different positions from which the sound level was recorded, as previously described herein.

If computing device 108 determines the recorded sound level (or average of the recorded sound levels) of sound emitting device 102 is outside the particular sound level range, however, this can be an indication that sound emitting device 102 is not emitting the proper sound level, and needs to be adjusted and retested. For instance, the sound level of sound emitting device may need to be increased if the recorded sound level is above the range, and may need to be decreased if the recorded sound level is below the range. In response to making such a determination, computing device 108 can send such an indication to mobile device 104 via network 106. An example display of such an indication will be further described herein (e.g., in connection with Figure 2D).

In some embodiments, computing device 108 can automatically (e.g., without receiving user input) adjust (e.g., increase or decrease) the sound level of sound emitting device 102 and initiate an additional sound level test (e.g., retest) of sound emitting device 102 with the adjusted sound level in response to determining the recorded sound level is outside (e.g., above or below) the particular sound level range. For example, computing device 108 can automatically determine a sound level to adjust sound emitting device 102 to and send, via network 106, a command to control panel 110 to adjust the sound level of sound emitting device 102 to the adjusted level and initiate the additional sound level test, and control panel 110 can in turn can send a command to sound emitting device 102 to adjust its sound level to the adjusted level and perform the additional test with the adjusted sound level, in a manner analogous to that previously described herein for the initial sound level test of sound emitting device 102. This process can continue to be repeated until the sound level of sound emitting device 102 is determined to not be outside the particular sound level range.

In some embodiments, the user of mobile device 104 can manually (e.g. provide a manual instruction to) adjust (e.g., increase or decrease) the sound level of sound emitting device 102 and initiate an additional sound level test (e.g., retest) of sound emitting device 102 with the adjusted sound level. For instance, in response to mobile device 104 receiving and displaying (e.g., via the user interface of mobile device 104) an indication that the recorded sound level of sound emitting device 102 is outside the particular sound level range, mobile device 104 can receive, via the user interface, an instruction to adjust the sound level of sound emitting device 102 and initiate the additional sound level test of sound emitting device 102 with the adjusted sound level. The sound level to adjust sound emitting device 102 to can be determined (e.g., suggested) by computing device 108, or can be input (e.g., manually input) by the user of mobile device 104 via the user interface, for example. Responsive to receiving the instruction, mobile device 104 can send, via network 106, a command to computing device 108 to adjust the sound level of sound emitting device 102 and initiate the additional sound level test of sound emitting device 102 with the adjusted sound level, in a manner analogous to that previously described herein for the initial sound level test of sound emitting device 102. This process can continue to be repeated until the sound level of sound emitting device 102 is determined to not be outside the particular sound level range.

Figures 2A-2D illustrate example displays for sound level testing in accordance with an embodiment of the present disclosure. The displays illustrated in Figure 2A-2D can be, for example, screen shots of displays provided on the user interface of mobile device 104 previously described in connection with Figure 1.

For example, display 220 illustrated in Figure 2A is a display of a list of sound emitting devices of a facility that have been determined to be within wireless range of mobile device 104 (e.g., "devices near you"), as previously described herein. As shown in Figure 2A, the list can include an identification, type, and location of these sound emitting devices. For instance, in the example illustrated in Figure 2A, the list includes dual optical heat voice and strobe self testing device N1.L2.D7 located in area 5 zone 5, dual optical heat voice and strobe self testing device N1.L2.D8 located in area 3 zone 3, and dual optical heat voice and strobe self testing device N1.L2.D6 located in area 4 zone 4.

Display 220 can further identify which of these sound emitting devices is located closest to mobile device 104 by including that device at the top of the list. For instance, in the example illustrated in Figure 2A, self testing device N1.L2.D7 is the closest sound emitting device to mobile device 104.

Display 220 can receive a selection (e.g., a touch selection) of the sound emitting device closest to mobile device 104 from a user of mobile device 104 in order to initiate a sound level test of that sound emitting device, as previously described herein. For instance, in the example illustrated in Figure 2A, display 220 includes an icon 221 for self testing device N1.L2.D7 that can be selected by the user to initiate a sound level test of that device.

As shown in Figure 2A, display 220 can include an indication of the number sound emitting devices of the facility for which a sound level test has been completed (e.g., 7/8 or 11/11). Further, as shown in Figure 2A, display 220 can, via toggle buttons, allow (e.g., enable) the user to control the sound emitting devices that are within range of mobile device 104 and have display 220 show only the sound emitting devices for which a sound level test has not been completed (e.g. are untested).

Display 222 illustrated in Figure 2B is a display of the sound level of the sound emitting device located closest to mobile device 104 that was recorded during a sound level test, as previously described herein. For instance, in the example illustrated in Figure 2B, the recorded sound level is 120 decibels (db). Further, display 222 includes an identification and location of the sound emitting device whose sound level has been recorded. For instance, in the example illustrated in Figure 2B, it is detector with sounder 5 that is located in room 127 of floor 8 of the facility whose sound level has been recorded to be 120 db.

Display 224 illustrated in Figure 2C is a display from which mobile device 104 can receive a request from the user of mobile device 104 to generate a report of the sound emitting devices (e.g., sounders) on which a sound level test has been performed and their respective sound levels (e.g., db values) recorded during the test, as previously described herein. For instance, in the example illustrated in Figure 2C, display 224 includes a button labeled "go" which the user can select (e.g., touch) to have the report generated (e.g., by computing device 108 previously described in connection with Figure 1) and sent to mobile device 104.

Display 226 illustrated in Figure 2D is a display indicating whether the sound level of the sound emitting device located closest to mobile device 104 recorded during a sound level test is outside a particular range and an additional (e.g., retest) of the sound emitting device is needed, as previously described herein. For instance, in the example illustrated in Figure 2D, display 226 is indicating that the sound level recorded during an initial (e.g. first) sound level test of the sound emitting device was above the particular sound level range (e.g., was greater than required), but that the sound level recorded during a subsequent (e.g., second) sound level test of the sound emitting device (e.g., after the sound level of the sound emitting device was adjusted, as previously described herein) was not outside the particular sound level range (e.g., was at the required sound level). Accordingly, no further (e.g. third) sound level test of the sound emitting device is needed in the example illustrated in Figure 2D.

Figure 3A illustrates a block diagram of a mobile device 304 for sound level testing in accordance with an embodiment of the present disclosure. Figure 3B illustrates a block diagram of a computing device 308 for sound level testing in accordance with an embodiment of the present disclosure. Mobile device 304 and computing device 308 can be, for example, mobile device 104 and computing device 108, respectively, previously described in connection with Figure 1.

As shown in Figure 3A, mobile device 304 can include a memory 334 and a processor 332. As shown in Figure 3B, computing device 308 can include a memory 344 and a processor 342.

The memories 334 and 344 can be any type of storage medium that can be accessed by processors 332 and 342, respectively, to perform various examples of the present disclosure. For example, the memories 334 and 344 can each be a non-transitory computer readable medium having computer readable instructions (e.g., computer program instructions) stored thereon that are executable by the processors 332 and 342, respectively, for sound level testing in accordance with the present disclosure.

The memories 334 and 344 can be volatile or nonvolatile memory. The memories 334 and 344 can also be removable (e.g., portable) memory, or non-removable (e.g., internal) memory. For example, the memories 334 and 344 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memories 334 and 344 are illustrated as being located within mobile device 304 and computing device 308, respectively, embodiments of the present disclosure are not so limited. For example, memories 334 and/or 344 can also be located internal to another computing resource (e.g., enabling computer readable instructions to be downloaded over the Internet or another wired or wireless connection).

As shown in Figure 3A, mobile device 304 can include a user interface 336. A user of mobile device 304 can interact with mobile device 304 via user interface 336. For example, the user interface 336 can provide (e.g., display and/or present) information to the user of mobile device 304, and/or receive information from (e.g., input by) the user of mobile device 304, as previously described herein. For instance, in some embodiments, user interface 336 can be a graphical user interface (GUI) that can provide and/or receive information to and/or from the user of mobile device 304, as previously described herein. The display can be, for instance, a touch-screen (e.g., the GUI can include touch-screen capabilities).

The user interface 336 can be localized to any language. For example, the user interface 336 can display information in any language, such as English, Spanish, German, French, Mandarin, Arabic, Japanese, Hindi, etc.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A mobile device (104, 304) for sound level testing, comprising:
a user interface (336);
a memory (334); and
a processor (332) configured to execute instructions stored in the memory (334) to:
determine a sound emitting device (102) of a facility that is located closest to the mobile device (104, 304) based on location information received by the mobile device (104, 304);
receive, via the user interface (336), an instruction to initiate a sound level test of the sound emitting device (102) that is located closest to the mobile device (104, 304);
send, to a computing device (108, 308), a command to initiate the sound level test of the sound emitting device (102) that is located closest to the mobile device (104, 304) responsive to receiving the instruction; and
record, during the sound level test, a sound level of the sound emitting device (102) that is located closest to the mobile device (104, 304).

2. The mobile device of claim 1, wherein the processor is configured to execute the instructions to:
receive, via the user interface, an instruction to initiate a sound level test of all sound emitting devices of the facility that are in a same zone of the facility as the sound emitting device that is located closest to the mobile device;
send, to the computing device responsive to receiving the instruction, a command to initiate the sound level test of all the sound emitting devices that are in the same zone as the sound emitting device that is located closest to the mobile device; and
record, during the sound level test, a sound level of each respective one of the sound emitting devices that are in the same zone as the sound emitting device that is located closest to the mobile device.

3. The mobile device of claim 1, wherein the processor is configured to execute the instructions to send the recorded sound level of the sound emitting device that is located closest to the mobile device to the computing device.

4. The mobile device of claim 3, wherein the processor is configured to execute the instructions to:
receive, from the computing device, an indication the recorded sound level of the sound emitting device that is located closest to the mobile device is outside a particular sound level range;
receive, via the user interface responsive to the indication, an instruction to adjust the sound level of the sound emitting device and initiate an additional sound level test of the sound emitting device that is located closest to the mobile device with the adjusted sound level;
send, to the computing device responsive to receiving the instruction, a command to initiate the additional sound level test of the sound emitting device that is located closest to the mobile device with the adjusted sound level; and
record, during the additional sound level test, a sound level of the sound emitting device that is located closest to the mobile device.

5. The mobile device of any one of claims 1-4, wherein the processor is configured to execute the instructions to determine the sound emitting device of the facility that is located closest to the mobile device based on a strength of a wireless signal received from the sound emitting device.

6. The mobile device of any one of claims 1-4, wherein the processor is configured to execute the instructions to record:
a time of the sound level test; and
a location of the sound emitting device in the facility.

7. The mobile device of any one of claims 1-4, wherein receiving the instruction to initiate the sound level test of the sound emitting device that is located closest to the mobile device includes receiving a selection of the sound emitting device via the user interface.

8. A method for sound level testing, comprising:
determining, by a mobile device (104, 304), a sound emitting device (102) of a facility that is located closest to the mobile device (104, 304) based on location information received by the mobile device (104, 304);
receiving, by the mobile device (104, 304), an instruction to initiate a sound level test of all sound emitting devices of the facility that are in a same zone of the facility as the sound emitting device (102) that is located closest to the mobile device (104, 304);
sending, by the mobile device (104, 304) to a computing device (108) responsive to receiving the instruction, a command to initiate the sound level test of all the sound emitting devices that are in the same zone as the sound emitting device (102) that is located closest to the mobile device (104, 304); and
recording, during the sound level test, a sound level of each respective one of the sound emitting devices that are in the same zone as the sound emitting device (102) that is located closest to the mobile device (104, 304).

9. The method of claim 8, wherein the method includes using the mobile device to record the sound level of each respective one of the sound emitting devices that are in the same zone as the sound emitting device that is located closest to the mobile device.

10. The method of claim 8, wherein the method includes using a microphone coupled to the mobile device to record the sound level of each respective one of the sound emitting devices that are in the same zone as the sound emitting device that is located closest to the mobile device.

11. The method of claim 8, wherein the method includes using an additional device paired with the mobile device to record the sound level of each respective one of the sound emitting devices that are in the same zone as the sound emitting device that is located closest to the mobile device.

12. The method of any one of claims 8-11, wherein the sound emitting device is a sounder of a fire alarm system of the facility.

13. The method of any one of claims 8-11, wherein the sound emitting device is a public address voice alarm device of the facility.

14. The method of any one of claims 8-11, wherein the method includes recording, during the sound level test, the sound level of each respective one of the sound emitting devices from a plurality of different locations.

15. The method of any one of claims 8-11, wherein the sound level of each respective one of the sound emitting devices is a decibel level of a sound emitted by each respective one of the sound emitting devices.
